# EUROPÄISCHE PATENTSCHRIFT

(11) **EP 1 396 187 B1**
(45) Veröffentlichungstag und Bekanntmachung des Hinweises auf die Patenterteilung: **20.04.2011**
(21) Anmeldenummer: 03102562.0
(22) Anmeldetag: 15.08.2003
(51) Int. Cl.: B30B 9/30, A01F 15/08

(54) **Rundballenpresse mit Wägeeinrichtung**
Rotobaler with weighing device
Presse à balles rondes avec un dispositif de pesée

(30) Priorität: 06.09.2002 DE 10241215
(43) Veröffentlichungstag der Anmeldung: 10.03.2004
(73) Patentinhaber: DEERE & COMPANY, Moline, Illinois 61265-8098 (US)
(72) Erfinder: Viaud, Jean, 70100 Gray (FR); Biziorek, Stéphane, 70600 Champlitte (FR)
(74) Vertreter: Holst, Sönke

(56) Entgegenhaltungen:
- EP-A- 1 053 673
- EP-A- 1 138 189
- US-A- 4 362 097
- US-B1- 6 378 276

## Beschreibung

Die Erfindung betrifft eine Rundballenpresse mit einer Wägeeinrichtung zur Erfassung der Gewichtskraft von gepressten Rundballen gemäß dem Oberbegriff des Anspruchs 1.

In der EP 1 034 695 A wird eine Rundballenpresse beschrieben, die mit einer als Wägeeinrichtung ausgebildeten Abrollvorrichtung für den fertigen Rundballen ausgestattet ist. Die Abrollvorrichtung ist als eine unterhalb der aufklappbaren Heckklappe angeordnete schiefe Ebene ausgebildet, über die der Ballen die Rundballenpresse verlässt und auf den Boden des Felds gelangt. Die Wägeeinrichtung erfasst die Gewichtskraft des Ballens, indem die von ihm auf die Abrollvorrichtung ausgeübte Kraft bzw. das Beschleunigungsverhalten des Ballens beim Herunterrollen auf der Abrollvorrichtung durch Sensoren gemessen wird.

Als nachteilig ist bei dieser Rundballenpresse anzusehen, dass für die Funktion wesentliche Elemente der Wägeeinrichtung ungeschützt außerhalb der Ballenpresse angeordnet sind, so dass sie den Umgebungseinflüssen ausgesetzt sind und leicht beschädigt werden können.

Die US 6 378 276 A beschreibt eine Rundballenpresse mit einem Fahrgestell mit einer quer zur Fahrtrichtung verlaufenden Achse und einem durch bewegliche Federn auf der Achse abgestützten Pressraum. Zwischen dem Fahrgestell und dem Pressraum sind Sensoren zur Erfassung des Abstands zwischen der Achse und dem Pressraum vorhanden, um Signale zu erzeugen, die eine Information über die vom Ballengewicht abhängige Entfernung zwischen der Achse und dem Pressraum enthalten.

In der EP 1 138 189 A wird eine Kombination aus einer Rundballenpresse und einer Wickeleinrichtung beschrieben, die auf einem gemeinsamen Fahrgestell befestigt sind. Eine Steuervorrichtung zur Ansteuerung eines Stelltriebs zum Abwerfen eines umwickelten Ballens ist mit einer Abtasteinrichtung für das Ballengewicht in der Presskammer verbunden, die sich gemäß der Zeichnung zwischen dem Fahrgestell und dem Ballen befindet.

Das der Erfindung zu Grunde liegende Problem wird darin gesehen, eine verbesserte Rundballenpresse mit einer Wägeeinrichtung bereit zu stellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Auflageelement im Pressraum der Rundballenpresse ist mit einer Wägeeinrichtung versehen. Ein im Pressraum hergestellter Rundballen liegt auf dem Auflageelement auf, so dass die von ihm auf das Auflageelement ausgeübte Kraft durch das Wägeelement erfasst und zur Bestimmung der Gewichtskraft bzw. Masse des Rundballens herangezogen werden kann. Das Auflageelement ist relativ zum Ballen beweglich. Eine Auswertungseinrichtung bestimmt anhand des Verlaufs der von der Wägeeinrichtung erfassten Kraft die Gewichtskraft des Ballens.

Im Konkreten kann sich der Rundballen, insbesondere beim Auswerfen, gegenüber dem Auflageelement bewegen und es beispielsweise überrollen, wobei die Gewichtskraft durch die Wägeeinrichtung erfasst wird. Alternativ oder zusätzlich kann sich das Auflageelement gegenüber der Rundballenpresse und somit dem Rundballen bewegen. Bei dieser Bewegung gibt es vorzugsweise einen Zeitpunkt, an dem sich der Rundballen (zumindest fast) ausschließlich auf dem Auflageelement abstützt. Die an diesem Zeitpunkt wirkende Kraft entspricht der Gewichtskraft des Ballens.

Ein derartiges Auflageelement wird zweckmäßigerweise durch einen Antrieb, beispielsweise einen Elektro- oder Hydromotor aktiv angetrieben. Um die Gewichtskraft des Ballens erfassen zu können, erfolgt die Bewegung des Auflageelements vorzugsweise um eine Schwenkachse, die sich zumindest näherungsweise durch die Mittenachse eines fertigen Rundballens erstreckt. Die Schwenkachse kann aber auch vor oder hinter dieser Mittenachse bzw. darunter oder darüber liegen. Das Auflageelement fährt somit an der Unterseite des Rundballens entlang.

Das Auflageelement befindet sich vorzugsweise während der Herstellung des Rundballens an dessen Unterseite (in Fahrtrichtung vor der Achse des Rundballens) in einer Ballenbildungsposition, um die Bildung eines Ballenkerns zu unterstützen. In dieser Position kann es entsprechend der Größe des sich bildenden Rundballens verstellt (nachgeführt) werden. Vor dem Auswerfen des Rundballens bietet es sich an, das Auflageelement in eine Ballenauswurfposition zu bewegen, in der der Ballen nicht mehr auf dem Auflageelement aufliegt. Während der dazwischen liegenden Bewegung wird ein Teilbereich der Unterseite des Ballens überstrichen und dessen Gewichtskraft ermittelt. In der Auswurfposition liegt das Auflageelement beispielsweise oberhalb des Auswurfendes des Pressraums der Rundballenpresse. In einer anderen Ausführungsform könnte das Auflageelement aus einer Ballenbildungsposition, in der es sich in Fahrtrichtung hinter der Achse des Rundballens befindet, nach vorn bewegt werden. Gleichzeitig erhält der Rundballen einen Impuls, der ihn aus der Presskammer nach hinten hinausrollt.

Um das Messergebnis nicht durch Reibungskräfte zwischen den Seitenwänden des Pressraums und dem Rundballen zu verfälschen, ist es sinnvoll, die Seitenwände des Pressraums vor dem Auswerfen des Rundballens und dem Erfassen seiner Gewichtskraft auseinander zu bewegen. Diese Bewegung erfolgt vorzugsweise durch den Antrieb, der auch das Auflageelement bewegt. Es wäre aber auch denkbar, einen separaten Antrieb zu verwenden, z. B. einen Hydraulikzylinder, insbesondere wenn das Auflageelement stationär ist. Das Auseinanderfahren der Seitenwände ist auch sinnvoll, um die Reibungskräfte beim Auswerfen des Ballens zu vermindern. Nachdem der Ballen ausgeworfen ist, werden die Seitenwände wieder zur Herstellung eines weiteren Ballens zusammengefahren.

Um (beispielsweise zur georeferenzierten Ertragskartierung) hinreichend genaue Messwerte für die Gewichtskraft des Rundballens zu erhalten, kann es angebracht sein, dass eine Auswertungseinrichtung betreibbar ist, die gemessene Gewichtskraft zu korrigieren, um beispielsweise eine eventuelle Neigung der Rundballenpressen aus der Horizontalen, die dazu führt, dass der Rundballen an den Seitenwänden anliegt, oder auf dem Rundballen aufliegende bzw. zwischen dem Rundballen und dem Auflageelement liegende Presselemente zu berücksichtigen.

Das Auflageelement, auf dem der Rundballen aufliegt, ist vorzugsweise eine Rolle oder Walze, deren Achse sich parallel zur Achse des Rundballen erstreckt. Zur Vermeidung von Reibung ist es zweckmäßigerweise um seine Achse drehbar. Es können auch mehrere Rollen verwendet werden.

Die Wägeeinrichtung umfasst vorzugsweise eine an sich bekannte Messzelle, die sich im Kraftfluss zwischen dem Auflageelement und dem Rahmen der Rundballenpresse befindet. Die Messzelle kann beispielsweise innerhalb der Auflageelemente (d. h. zwischen ihrer Mantelfläche und ihrer Achse), in deren Anbringung am Schwenkarm, innerhalb des Schwenkarms und/oder an dessen Anbringung am Rahmen der Ballenpresse angeordnet sein. Es können aber auch beliebige andere Mittel, die zur Erfassung der Gewichtskraft des Rundballens geeignet sind, verwendet werden.

In den Zeichnungen ist ein nachfolgend näher beschriebenes Ausführungsbeispiel der Erfindung dargestellt. Es zeigt:
- Fig. 1: eine schematische Darstellung einer erfindungsgemäßen Rundballenpresse in Seitenansicht in einer geschlossenen Stellung,
- Fig. 2: die Rundballenpresse nach Figur 1 in einer Ansicht von hinten und in schematischer Darstellung,
- Fig. 3: die Rundballenpresse nach Figur 1 in einer geöffneten Stellung, und
- Fig. 4: ein Schema des zeitlichen Verlaufs der gemessenen Auflagekräfte.

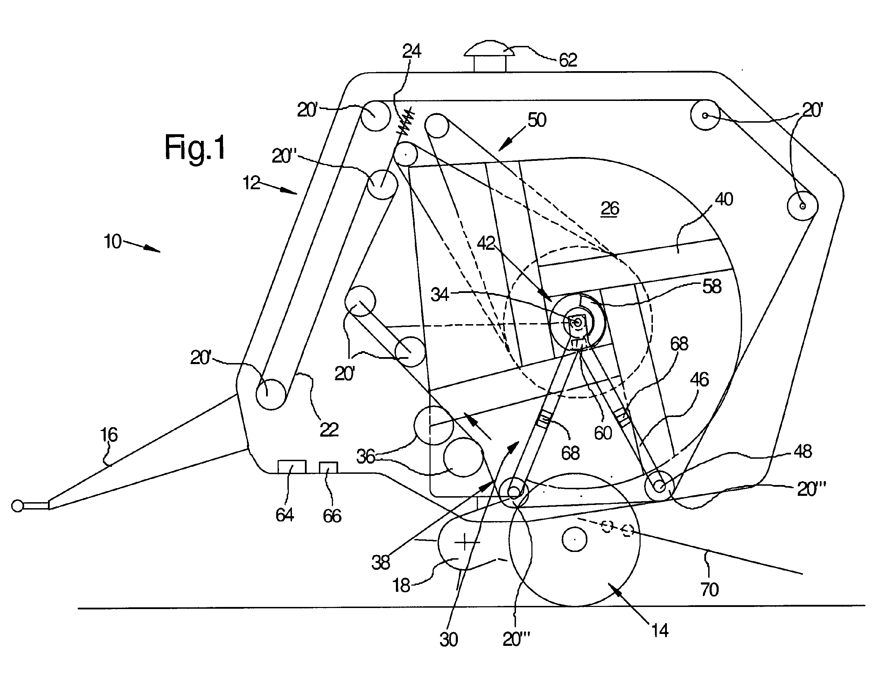

Eine in Figur 1 gezeigte Rundballenpresse 10 umfasst einen Rahmen 12, ein Fahrgestell 14, eine Deichsel 16, eine Aufnahmevorrichtung 18, Rollen 20', 20", 20''', Presselemente 22, eine Spannvorrichtung 24, Seitenwände 26, einen Pressraum 28, Schwenkteile 30 und eine Drückevorrichtung 32.

Die Rundballenpresse 10 ist in dem dargestellten Ausführungsbeispiel mit einem in der Größe veränderbaren Pressraum 28 versehen, kann aber auch mit einem größenunveränderlichen Pressraum 28 versehen werden. In dem Pressraum 28 wird vom Boden aufgenommenes Erntegut zu einem so genannten Rundballen geformt, der mit seinen Stirnseiten auf die Seitenwände 26 drückt.

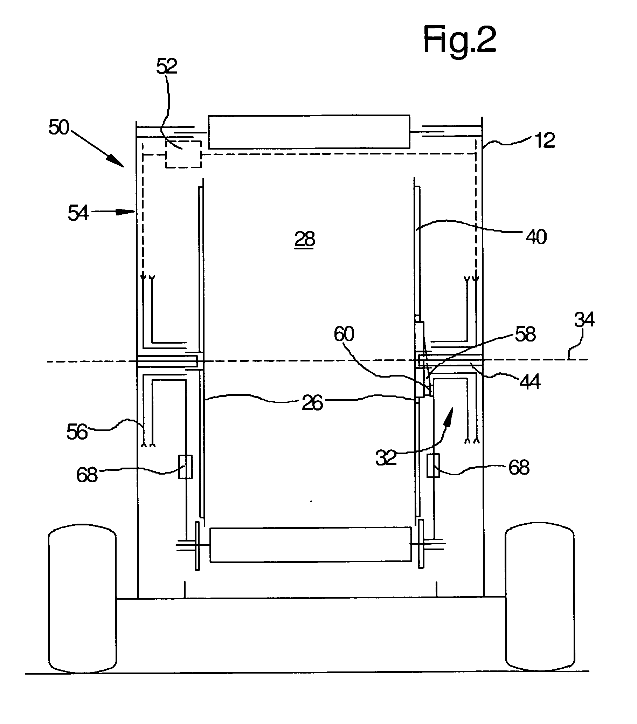

Der Rahmen 12 ist insbesondere in Figur 2 gut zu erkennen und stellt sich als ein Schweiß- und/oder Schraubzusammenbau dar, an dem alle Komponenten der Rundballenpresse 10 befestigt sind, der sich auf dem Fahrgestell 14 abstützt und der mit der Deichsel 16 an ein nicht gezeigtes Zugfahrzeug anschließbar ist. Der Rahmen 12 trägt unter anderem nicht dargestellte Verkleidungsteile, einige der Rollen 20', 20", 20''', die Seitenwände 26 und die Schwenkteile 30. Der Rahmen 12 umschließt den von den Seitenwänden 26 und den Presselementen 22 umgebenen Bereich weiträumig.

Das Fahrgestell 14 besteht in nicht näher bezeichneter Weise aus einer Achse und Rädern, auf denen der Rahmen 12 ruht. Die Deichsel 16 greift an der Vorderseite des Rahmens 12 starr oder höhenverstellbar an.

Die Aufnahmevorrichtung 18 ist in üblicher Weise als eine sogenannte Pick-Up ausgebildet und an den Rahmen 12 höhenverstellbar angeschlossen. Der Aufnahmevorrichtung 18 kann eine ebenfalls an sich bekannte Schneidvorrichtung nachgeordnet werden. Die Aufnahmevorrichtung 18 nimmt auf dem Boden abgelegtes Gut auf und gibt es über eine gegebenenfalls vorhandene Schneidvorrichtung in den Pressraum 28 weiter, in dem es zu einem zylindrischen Rundballen geformt wird.

Einige der Rollen 20 sind ortsfest in dem Rahmen 12 drehbar gelagert und werden mit 20' bezeichnet. Eine andere Rolle 20" ist gegen die Kraft einer Feder 24 verstellbar, damit die Presselemente 22 dem wachsenden Ballendurchmesser nachgeben können. Wieder andere Rollen 20''' sind auf Schwenkteilen 30 um eine Schwenkachse 34 schwenkbar. Alle Rollen 20', 20", 20"' verlaufen zueinander parallel und sind derart breit ausgebildet und so angeordnet, dass die Presselemente 22 darüber ablaufen und den Pressraum 28 umschließen können. Neben den Rollen 20', 20", 20"' sind auch Walzen 36 vorgesehen, die sich oberhalb einer Eingangsöffnung 38 in den Pressraum 28 befinden, als sogenannte Starterrollen beim Ballenbildungsbeginn funktionieren und auf denen sich ein Teil des Gewichts des Rundballens abstützen kann.

Die Presselemente 22 sind als parallel zueinander verlaufende Riemen ausgebildet, die den Pressraum 28 auf seiner Breite im Wesentlichen bedecken. Statt der Ausbildung als Riemen könnte auch eine als Stabkettenförderer oder als breites Band gewählt werden, wie dies ebenfalls bekannt ist. Die Presselemente 22 sind endlos und werden dadurch in Umlaufbewegung versetzt, dass sie reibschlüssig auf wenigstens einer antreibbaren Rolle 20' aufliegen. Die Presselemente 22 bilden im Bereich der Eingangsöffnung 38 eine Brücke, die sich mit zunehmendem Erntegut zu einer nach innen ausweitenden Schlaufe formt und den Rundballen umgibt. Die Presselemente 22 werden dadurch unter Spannung gehalten, dass sie über die lageveränderliche Rolle 20" geführt werden.

Die Spannvorrichtung 24 wird in bekannter Weise dadurch gebildet, dass die Rolle 20" auf einem nicht dargestellten Arm, Schlitten oder dergleichen gegen die Kraft der Feder 24 geführt ist und stets eine Schlaufe der Presselemente 22 gespannt hält.

Die Seitenwände 26 nehmen in einer Ansicht auf Figur 1 im Wesentlichen die Form eines "D" ein, wobei der rückwärtige und in Figur 1 rechte Endbereich einen Bogen bildet, der im Wesentlichen der Umfangslinie des fertigen Rundballens folgt, d. h. auf einem Teil eines runden Kreisbogens. Die Seitenwände 26 sind grundsätzlich einstückig ausgebildet, d.h. sie sind nicht wie bei herkömmlichen Rundballenpressen entlang einer etwa mittigen vertikalen Ebene geteilt; sie können aber durchaus aus mehreren Teilen zusammengesetzt werden. Aus Figur 2 geht hervor, dass die Seitenwände 26 einen nicht unbeträchtlichen Abstand zu dem Rahmen 12 einnehmen und somit nach außen ausgelenkt werden können, wie dies nachfolgend beschrieben wird. Die Seitenwände 26 sind mittels Versteifungsstreben 40 biegesteif ausgebildet, wobei die Versteifungsstreben 40 aufgeschraubt oder aufgeschweißt werden können. Gemäß der Darstellung in Figur 2 verlaufen die Versteifungsstreben 40 nahezu sternförmig mit Bezug auf die Schwenkachse 34 und verlaufen tangential an dieser mit geringem Abstand vorbei, um schließlich mehr oder weniger senkrecht aufeinander zu stoßen. Aufgrund dieses Verlaufs schließen sie eine in diesem Ausführungsbeispiel viereckige Kammer 42 ein. In ihrem vorderen Endbereich sind die Seitenwände 26 mit dem Rahmen 12 im Wesentlichen fest verbunden; allerdings ist eine geringe Schwenkbewegung ausgehend von einer Lage gemäß Figur 2 um wenige Grade nach außen dadurch möglich, dass entweder die Seitenwände 26 im Anschlussbereich z. B. aus einem nachgiebigen Blech gebildet sind, oder in einer nachgiebigen Verbindung, z. B. an einem nachgiebigen Flansch oder an federbelasteten Schrauben festgelegt sind. Der Anschluss der Seitenwände 26 an dem Rahmen 12 erfolgt im Wesentlichen entlang einer mehr oder weniger vertikalen Linie am vorderen Ende des Pressraums 28. Im Bereich der Schwenkachse 34 ist jede Seitenwand 26 auf einer Achse 44 geführt, die an dem Rahmen 12 starr befestigt ist und zugleich als Schwenkachse für die Schwenkteile 30 dient.

Anders als in dem gezeigten Ausführungsbeispiel kann der Anschluss der Seitenwand 26 oder Seitenwände 26 auch entlang einer oberen mehr oder weniger waagrechten oder leicht schrägen Linie erfolgen, so dass sich eine nach unten öffnende Divergenz der Seitenwände 26 ergibt, wenn der Rundballen ausgeworfen wird.

Der Pressraum 28 ist in seiner Größe veränderlich und wird am Anfang, d. h. bei leerem Pressraum 28, von einem ungefähr dreieckigen zylindrischen Raum zwischen der Aufnahmevorrichtung 18 und dem Pressmittel 22 und seitlich von den Seitenwänden 26 begrenzt. Mit zunehmend zugeführtem Erntegut erweitert sich der Pressraum 28 und nimmt schließlich einen Querschnitt ein, der im rückwärtigen Bereich der Form der Seitenwände 26 folgt.

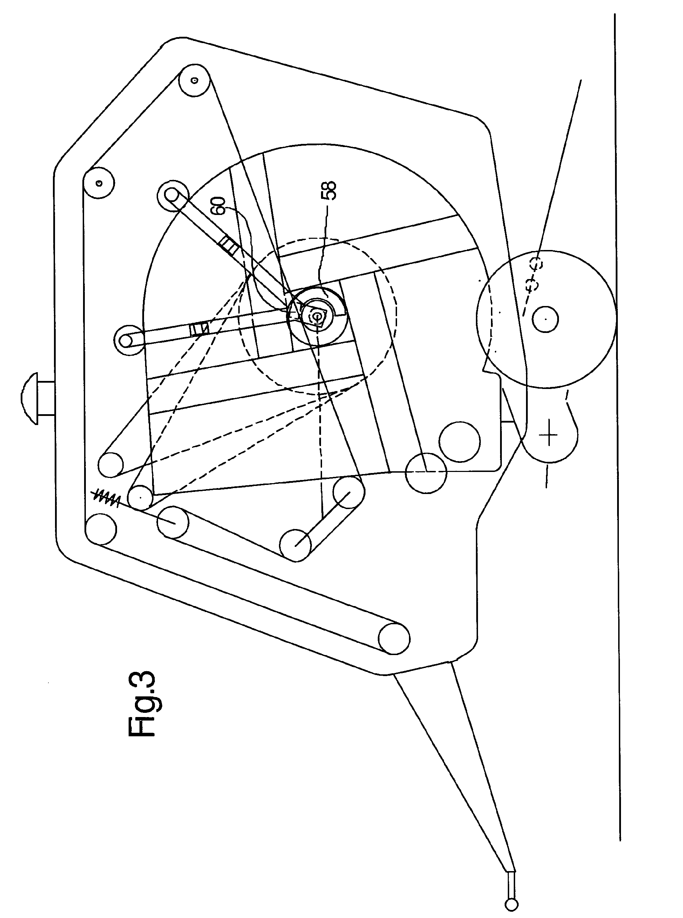

Die Schwenkteile 30 sind in diesem Ausführungsbeispiel auf jeder Seite mit einem oder mehreren radial zu der Schwenkachse 34 verlaufenden Arm(en) 46 und einer oder mehreren an dessen/deren radial außenliegenden Ende angebrachten quer dazu verlaufenden Traverse(n) 48 versehen. Am Ende jeder Traverse 48 ist jeweils eine Rolle 20'" vorgesehen. Die Schwenkteile 30 sind mit dem radial innenliegenden Ende jedes Arms 46 schwenkbar auf der Achse 44 angeordnet. Die Stellung der Arme 46 wird mittels eines Antriebs 50 gesteuert, der einen Motor 52 und pro Schwenkteil 30 ein Zugmittelgetriebe 54 oder einen sonstigen Schwenkantrieb enthält. Die Schwenkteile 30 könnten auch durch gemeinsame Schwenkantriebe synchron angetrieben werden bzw. starr miteinander verbunden sein, so dass nur ein einziger Schwenkantrieb erforderlich ist. Der Motor 52 kann in seinen jeweiligen Stellungen gebremst werden und hält die Arme 46 entsprechend ortsfest. Den jeweiligen Zugmittelgetrieben 54 zugehörige Abtriebsräder 56 sind konzentrisch zueinander und zu der Achse 44 gelagert und drehfest mit jeweils einem Schwenkteil 30 verbunden. Die Steuerung der Schwenkteile 30 erfolgt derart, dass der vordere Schwenkteil 30 während der Ballenbildungsphase verstellt wird, um bei der Bildung eines Ballenkerns zu helfen, und dass der vordere Schwenkteil 30 eine untere Lage einnimmt, während der Rundballen gebildet wird, und beide Schwenkteile 30 eine obere Lage annehmen, wenn der Rundballen ausgeworfen wird. Die beiden Endlagen der Schwenkteile 30 sind in den Figuren 1 und 3 dargestellt.

Die soweit beschriebene Rundballenpresse ist im Wesentlichen in allen Einzelheiten in der EP 1 264 531 A beschrieben.

Die Drückevorrichtung 32 enthält eine ansteigende Fläche 58 und ein Folgeglied 60 (s. den Ausbruch zu Figur 2 mit einer Seitenansicht hierzu) und dient dazu, zum und beim Auswerfen des Rundballens den Druck und damit die Reibung der Seitenwände 26 auf dessen Stirnflächen zu verringern, so dass der Rundballen leichter aus dem Pressraum 28 entladen werden kann.

Die ansteigende Fläche 58 ist auf einem zu der Schwenkachse 34 konzentrisch verlaufenden Kreisbogen gelegen und an der Außenseite beider Seitenwände 26 befestigt, wobei es auch ausreichend wäre, nur eine ansteigende Fläche, d. h. an einer Seitenwand 26 vorzusehen. In dem vorliegenden Ausführungsbeispiel ist die ansteigende Fläche 58 aus einem gebogenen Stahlkeil gebildet, der gleichmäßig ansteigend innerhalb der Kammer 42 auf die Seitenwände 26 aufgeschraubt ist.

Das Folgeglied 60 ist auf der der Längsmittenebene der Rundballenpresse 10 zugelegenen Seite des Arms 46 des rückwärtigen Schwenkteils 30 vorgesehen und als Gleitfläche ausgebildet. Zur Minimierung der Reibung werden die Reibflächen geschmiert; alternativ kann das Folgeglied 60 auch als Rad, Rolle, Kugel oder dergleichen drehendes Glied ausgebildet werden. Das Folgeglied 60 ist derart angeordnet, dass es bei einer Drehung des Schwenkteils 30 um die Schwenkachse 34 eine runde Kreisbahn beschreibt und sich auf der ansteigenden Fläche 58 bewegt. Vorzugsweisen befindet sich das Folgeglied 60 stets in Anlage auf der ansteigenden Fläche 58.

Das Folgeglied 60 liegt auf der höchsten Erhebung der ansteigenden Fläche 58 auf, wenn sich die Schwenkteile 30 in ihrer unteren Endstellung befinden - s . Figur 1 - und der Rundballen erzeugt werden kann. Wenn die Schwenkteile 30 in ihre obere und in Figur 3 gezeigte Stellung gebracht werden, in der der Rundballen aus dem Pressraum 28 entlassen werden kann, wird das Folgeglied 60 zu der niedrigsten Stelle der ansteigenden Fläche 58 bewegt. Der Unterschied zwischen der höchsten und der niedrigsten Stelle kann z. B. ca. 20 - 50 mm betragen.

Sobald in dem Pressraum 28 ein Rundballen gebildet ist, wird der Schwenkteil 30 angehoben, worauf sich aufgrund des in dem Pressraum 28 herrschenden Drucks ausgehend von dem gepressten Erntegut die Seitenwände 26 nach außen bewegen. Infolgedessen verringert sich die Reibung zwischen der Innenseite der Seitenwände 26 und den Stirnflächen des Rundballens und letzterer fällt aufgrund der Schwerkraft aus dem Pressraum 28, d.h. er rollt über den Boden des Pressraums und eine sich nach hinten daran anschließenden Abrollvorrichtung 70 auf den Boden des Feldes. Sobald der Rundballen den Pressraum 28 verlassen hat und die Rundballenpresse 10 soweit weiterbewegt worden ist, dass der Schwenkteil 30 wieder abgesenkt werden kann, erfolgt eine Schwenkbewegung des Schwenkteils 30 in der entgegensetzten Richtung, so dass das Folgeglied 60 zur größten Erhebung der ansteigenden Fläche 58 bewegt wird und dabei die Seitenwände 26 nach innen drückt.

Die Rundballenpresse 10 ist zur Ertragskartierung mit einem Positionssensor 62 in Form einer GPS-Satellitenantenne ausgestattet. Er ist mit einer Auswertungseinrichtung 64 verbunden, die wiederum mit einer Wägeeinrichtung verbunden ist, die einen Neigungssensor 66 und vier Messzellen 68 umfasst. Die Messzellen 68 sind in die (an ihren Anbringungsstellen unterbrochenen) Arme 46 eingefügt und erfassen die Kraft, die der Rundballen auf die als Auflageelemente dienenden Rollen 20''' ausübt. Es können an sich bekannte Messzellen, Dehnungsmessstreifen oder beliebige andere Kraftsensoren Verwendung finden. Anstelle der zwei eingezeichneten Arme 46 könnten die Rollen 20''' auch durch eine Längstraverse verbunden sein, an die sich ein nach oben zur Schwenkachse 34 führender Arm anschließt, in den jeweils eine Messzelle 68 eingefügt ist - in dieser Ausführungsform sind nur zwei Messzellen 68 erforderlich.

Eine Busleitung (z. B. CAN-Bus) verbindet den Positionssensor 62 mit dem Neigungssensor 66, den Messzellen 68 und dem Positionssensor 62. Die Auswertungseinrichtung 64 und der Positionssensor 62 könnten sich auch auf dem ziehenden Fahrzeug befinden, wobei entsprechende Software den räumlichen Versatz zwischen dem Positionssensor 62 und der Aufnahmeeinrichtung 18 berücksichtigt. Die Auswertungseinrichtung 64 erstellt beim Betrieb eine Ertragskarte, in der die mittels der Messzellen 68 erfasste Gewichtskraft bzw. Masse der erzeugten Rundballen georeferenziert verzeichnet ist.

Beim Aufnehmen des Ernteguts vom Feld bildet sich im Pressraum 28 nach und nach ein Rundballen. Hat er die gewünschte Größe erreicht, die durch einen Sensor erfasst wird, wird der Motor 52 des Antriebs 50, wie oben beschrieben, durch eine Steuerung aktiviert. Dadurch drehen sich die Schwenkteile 30 in der Figur 1 im Gegenuhrzeigersinn und die Seitenwände 46 bewegen sich nach außen. Der Rundballen liegt zunächst (mit den dazwischen liegenden Abschnitten der Presselemente 22) auf den Rollen 20"' auf, während die Auflagekraft des Rundballens auf den übrigen Rollen 20 oder Walzen 36 hinreichend gering bleibt. Die Presselemente 22 sind (insbesondere durch die Schwenkbewegung der Schwenkteile 30 nach hinten) entspannt und beeinflussen die Messwerte der Messzellen 68 nicht. Eine Reibung des Rundballens an den Seitenwänden 26 entfällt, solange die Rundballenpresse 10 hinreichend horizontal steht, da die Seitenwände 26 nach außen verstellt sind. Die vordere (in Figur 1 links eingezeichnete) Rolle 20"' rollt an der Unterseite des Rundballens und dann an seiner Rückseite entlang, bis sie an seiner Oberseite zu stehen kommt, wie in Figur 3 dargestellt. Danach wird die Heckklappe geöffnet und der Rundballen ausgeworfen.

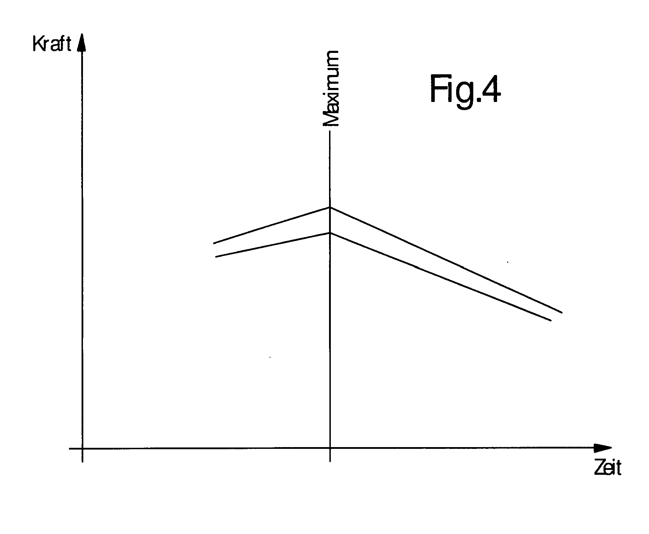

Die Auswertungseinrichtung 64 erfasst bei diesem Vorgang die Messwerte der Messzellen 68. Ein Beispiel des Messwerts zweier Messzellen 68 auf der linken und rechten Seite des Rundballens in Abhängigkeit von der Zeit ist in der Figur 4 dargestellt. Die Messwerte steigen mit anwachsender Zeit (und Schwenkwinkel) bis auf ein Maximum an und sinken dann wieder ab. Beim Erreichen des Maximums liegt das Gewicht des Rundballens nur auf den Rollen 20''' (hauptsächlich auf der in Fahrtrichtung vorderen Rolle 20"') auf, während die Walzen 36 durch den Rundballen fast nicht mehr belastet sind. Das Maximum gibt somit eine Information über die Gewichtskraft des Rundballens. Anhand der Messwerte, insbesondere der Höhe und/oder Lage des Maximums, bestimmt die Auswertungseinrichtung 64 die Gewichtskraft des Rundballens.

Die in Figur 4 dargestellten Messwerte der beiden Seiten unterscheiden sich geringfügig, was daran liegen kann, dass die Rundballenpresse 10 in Fahrtrichtung nach links oder rechts geneigt ist, so dass der Rundballen sogar an einer nach außen verschobenen Seitenwand 26 anliegt. Eine Neigung in Fahrtrichtung verfälscht den Messwert der Wägeeinrichtung nicht, da die Rollen 20"' an der Unterseite des Rundballens abrollen und sich unabhängig von einer Neigung der Rundballenpresse 10 beim Erreichen des Maximums der Messkurve (s. Figur 4) unter dem Rundballen befinden. Die Auswertungseinrichtung 64 berücksichtigt beim Berechnen der Gewichtskraft den Mittelwert der beiden Messwerte und die mittels des Neigungssensors 66 erfasste seitliche Neigung der Rundballenpresse 10, um diese das Messergebnis verfälschenden Einflüsse auszugleichen. Außerdem kann das Gewicht der zwischen den Rollen 20"' und dem Rundballen liegenden Schlaufe der Presselemente 22 vom Messwert abgezogen werden. Es bietet sich an, die Wägeeinrichtung der Rundballenpresse (10) mit verschieden großen Rundballen zu kalibrieren, um möglichst genaue Messwerte zu erhalten.

## Patentansprüche

1. Rundballenpresse (10) mit einem Pressraum (28) und einer Wägeeinrichtung (66,68) zur Erfassung der Gewichtskraft von gepressten Rundballen, die eingerichtet ist, die Kraft zu erfassen, die ein Rundballen auf ein sich im Pressraum (28) befindliches Auflageelement (20"') ausübt, **dadurch gekennzeichnet, dass** sich das Auflageelement (20"') vor dem und/oder beim Auswerfen eines Rundballens relativ zum Rundballen bewegt, und dass eine Auswertungseinrichtung (64) betreibbar ist, anhand des Verlaufs der von der Wägeeinrichtung (64,66) bei der Relativbewegung zwischen Rundballen und Auflageelement (20"') erfassten Kraft die Gewichtskraft des Rundballens zu bestimmen.

2. Rundballenpresse (10) nach Anspruch 1, **dadurch gekennzeichnet, dass** das Auflageelement (20"') durch einen Antrieb (50) bewegbar ist.

3. Rundballenpresse (10) nach Anspruch 1 oder 2, **dadurch gekennzeichnet, dass** ein Rundballen sich während der Bewegung des Auflageelements (20"') an einem Zeitpunkt zumindest näherungsweise ausschließlich auf dem Auflageelement (20"') abstützt.

4. Rundballenpresse (10) nach Anspruch 2 oder 3, **dadurch gekennzeichnet, dass** das Auflageelement (20"') um eine Schwenkachse (34) bewegbar ist, die sich in der Nähe der die Mittenachse eines fertig ausgebildeten Rundballens erstreckt.

5. Rundballenpresse (10) nach einem der Ansprüche 2 bis 4, **dadurch gekennzeichnet, dass** das Auflageelement (20"') zwischen einer Ballenbildungsposition, in der es sich unter dem Rundballen befindet, und einer Ballenauswurfposition, in der der Rundballen nicht auf dem Auflageelement (20"') aufliegt, beweglich ist.

6. Rundballenpresse (10) nach Anspruch 5, **dadurch gekennzeichnet, dass** sich das Auflageelement (20"') in der Ballenauswurfposition oberhalb des Auswurfendes der

7. Rundballenpresse (10) nach Anspruch 5 oder 6, **dadurch gekennzeichnet, dass** das Auflageelement (20"') in der Ballenbildungsposition während der Ballenbildungsphase verstellt wird, um die Bildung eines Ballenkerns zu unterstützen.

8. Rundballenpresse (10) nach einem der Ansprüche 1 bis 7, **dadurch gekennzeichnet, dass** die Seitenwände (26) des Pressraums (28) vor der Erfassung der Gewichtskraft des Rundballens auseinanderbewegbar und anschließend wieder zusammenführbar sind.

9. Rundballenpresse (10) nach Anspruch 8, **dadurch gekennzeichnet, dass** die Seitenwände (26) durch den Antrieb (50) des Auflageelements verstellbar sind.

10. Rundballenpresse (10) nach einem der Ansprüche 1 bis 9, **dadurch gekennzeichnet, dass** die Auswertungseinrichtung (64) betreibbar ist, Korrekturen der gemessenen Gewichtskraft des Rundballens durchzuführen, insbesondere aufgrund einer Neigung der Rundballenpresse aus der Horizontalen und/oder des Gewichts von auf dem Rundballen aufliegenden Presselementen (22).

11. Rundballenpresse (10) nach einem der vorhergehenden Ansprüche, **dadurch gekennzeichnet, dass** das Auflageelement eine oder mehrere vorzugsweise drehbar gelagerte Rolle (20"') oder Rollen umfasst, deren Achse sich parallel zur Achse des Rundballens erstreckt und auf denen der Rundballen aufliegt.

12. Rundballenpresse (10) nach einem der vorhergehenden Ansprüche, **dadurch gekennzeichnet, dass** die Wägeeinrichtung (64,66) eine zwischen dem Auflageelement (20"') und dem Rahmen (12) der Rundballenpresse (10) angeordnete Messzelle (68) umfasst.

13. Rundballenpresse (10) nach Anspruch 12, **dadurch gekennzeichnet, dass** die Messzelle (68) innerhalb des Auflageelements und/oder in dessen Anbringung an einem schwenkbaren Arm (46) und/oder innerhalb des schwenkbaren Arms (46) und/oder an dessen Anbringung am Rahmen (12) der Rundballenpresse (10) angeordnet ist.

14. Rundballenpresse (10) nach Anspruch 1, **dadurch gekennzeichnet, dass** sich der Rundballen beim Auswerfen gegenüber dem Auflageelement (20"') bewegt und es beispielsweise überrollt und/oder dass sich das Auflageelement gegenüber der Rundballenpresse (10) und somit gegenüber dem Rundballen bewegen kann.

## Claims

1. Round baler (10) with a baling chamber (28) and a weighing device (66, 68) for detecting the weight of compressed round bales, said weighing device being designed to detect the force exerted by a round bale on a support element (20"') located in the baling chamber (28), **characterized in that** the support element (20"') moves relative to the round bale prior to and/or upon ejection of a round bale, and **in that** an evaluating device (64) can be operated to determine the weight of the round bale based on the profile of the force detected by the weighing device (64, 66) during the relative movement between the round bale and support element (20''').

2. Round baler (10) according to Claim 1, **characterized in that** the support element (20''') can be moved by a drive (50).

3. Round baler (10) according to Claim 1 or 2, **characterized in that** at a time point during the movement of the support element (20'''), a round bale is supported at least approximately exclusively on the support element (20''').

4. Round baler (10) according to Claim 2 or 3, **characterized in that** the support element (20''') can be moved about a pivot axis (34) extending in the vicinity of the centre axis of a finished round bale.

5. Round baler (10) according to one of Claims 2 to 4, **characterized in that** the support element (20''') is movable between a bale-forming position, in which said support element is located under the round bale, and a bale-ejecting position, in which the round bale does not rest on the support element (20''').

6. Round baler (10) according to Claim 5, **characterized in that** the support element (20"') is located above the ejection end of the round baler (10) in the bale-ejecting position.

7. Round baler (10) according to Claim 5 or 6, **characterized in that**, during the bale-forming phase, the support element (20"') is adjusted in the bale-forming position in order to support the formation of a bale core.

8. Round baler (10) according to one of Claims 1 to 7, **characterized in that**, before the weight of the round bale is detected, the side walls (26) of the baling chamber (28) can be moved apart from one another and subsequently brought together again.

9. Round baler (10) according to Claim 8, **characterized in that** the side walls (26) can be adjusted by the drive (50) of the support element.

10. Round baler (10) according to one of Claims 1 to 9, **characterized in that** the evaluating device (64) can be operated to carry out corrections of the measured weight of the round bale, in particular due to an inclination of the round baler from the horizontal and/or to the weight of baling elements (22) resting on the round bale.

11. Round baler (10) according to one of the preceding claims, **characterized in that** the support element comprises a roller (20"') or a number of rollers, preferably mounted rotatably, the axis of which extends parallel to the axis of the round bale, and on which the round bale rests.

12. Round baler (10) according to one of the preceding claims, **characterized in that** the weighing device (64, 66) comprises a measuring cell (68) arranged between the support element (20"') and the frame (12) of the round baler (10).

13. Round baler (10) according to Claim 12, **characterized in that** the measuring cell (68) is arranged within the support element and/or in the mounting thereof on a pivotable arm (46) and/or within the pivotable arm (46) and/or on the mounting thereof on the frame (12) of the round baler (10).

14. Round baler (10) according to Claim 1, **characterized in that**, upon being ejected, the round bale moves relative to the support element (20"') and, for example, rolls over the latter, and/or **in that** the support element can move relative to the round baler (10) and therefore relative to the round bale.

## Revendications

1. Presse à balles rondes (10) avec une chambre de presse (28) et un dispositif de pesée (66, 68) pour détecter le poids de balles rondes pressées, qui est conçu pour détecter la force qu'une balle ronde exerce sur un élément d'appui (20''') se trouvant dans la chambre de presse (28), **caractérisée en ce que** l'élément d'appui (20''') se déplace avant et/ou pendant l'éjection d'une balle ronde, et **en ce qu'**un dispositif d'évaluation (64) peut être utilisé pour déterminer le poids de la balle ronde à l'aide de l'évolution de la force détectée par le dispositif de pesée (64, 66) lors du mouvement relatif entre la balle ronde et l'élément d'appui (20''').

2. Presse à balles rondes (10) selon la revendication 1, **caractérisée en ce que** l'élément d'appui (20''') peut être déplacé au moyen d'un entraînement (50).

3. Presse à balles rondes (10) selon la revendication 1 ou 2, **caractérisée en ce qu'**une balle ronde s'appuie au moins presqu'exclusivement sur l'élément d'appui (20''') à un instant pendant le mouvement de l'élément d'appui (20''').

4. Presse à balles rondes (10) selon la revendication 2 ou 3, **caractérisée en ce que** l'élément d'appui (20''') est mobile autour d'un axe de pivotement (34), qui s'étend à proximité de l'axe central d'une balle ronde terminée.

5. Presse à balles rondes (10) selon l'une quelconque des revendications 2 à 4, **caractérisée en ce que** l'élément d'appui (20''') est mobile entre une position de formation de balle, dans laquelle il se trouve en dessous de la balle ronde, et une position d'éjection de balle, dans laquelle la balle ronde ne repose pas sur l'élément d'appui (20''').

6. Presse à balles rondes (10) selon la revendication 5, **caractérisée en ce que** l'élément d'appui (20''') se trouve dans la position d'éjection de balle au-dessus de l'extrémité d'éjection de la presse à balles rondes (10).

7. Presse à balles rondes (10) selon la revendication 5 ou 6, **caractérisée en ce que** l'élément d'appui (20''') est déplacé dans la position de formation de balle pendant la phase de formation de balle, afin de soutenir la formation d'un coeur de balle.

8. Presse à balles rondes (10) selon l'une quelconque des revendications 1 à 7, **caractérisée en ce que** les parois latérales (26) de la chambre de presse (28) peuvent être écartées avant la détection du poids de la balle ronde et peuvent ensuite être de nouveau rapprochées.

9. Presse à balles rondes (10) selon la revendication 8, **caractérisée en ce que** les parois latérales (26) peuvent être déplacées au moyen de l'entraînement (50) de l'élément d'appui.

10. Presse à balles rondes (10) selon l'une quelconque des revendications 1 à 9, **caractérisée en ce que** le dispositif d'évaluation (64) peut être utilisé pour effectuer des corrections du poids mesuré de la balle ronde, en particulier sur la base d'une inclinaison de la presse à balles rondes par rapport à l'horizontale et/ou du poids d'éléments de presse (22) reposant sur la balle ronde.

11. Presse à balles rondes (10) selon l'une quelconque des revendications précédentes, **caractérisée en ce que** l'élément d'appui comprend un ou plusieurs rouleau(x) (20'''), monté(s) de préférence de façon rotative, dont l'axe s'étend parallèlement à l'axe de la balle ronde et sur lesquels la balle ronde repose.

12. Presse à balles rondes (10) selon l'une quelconque des revendications précédentes, **caractérisée en ce que** le dispositif de pesée (64, 66) comprend une cellule de mesure (68) disposée entre l'élément d'appui (20''') et le châssis (12) de la presse à balles rondes (10).

13. Presse à balles rondes (10) selon la revendication 12, **caractérisée en ce que** la cellule de mesure (68) est disposée à l'intérieur de l'élément d'appui et/ou dans le support de celui-ci sur un bras pivotant (46) et/ou à l'intérieur du bras pivotant (46) et/ou sur le support de celui-ci sur le châssis (12) de la presse à balles rondes (10).

14. Presse à balles rondes (10) selon la revendication 1, **caractérisée en ce que** la balle ronde se déplace par rapport à l'élément d'appui (20''') lors de l'éjection et roule par exemple sur celui-ci et/ou **en ce que** l'élément d'appui peut se déplacer par rapport à la presse à balles rondes (10) et dès lors par rapport à la balle ronde.
